Europäisches Patentamt

European Patent Office

Office européen des brevets

(11) Numéro de publication : **0 449 711 B1**

(12) **FASCICULE DE BREVET EUROPEEN**

(45) Date de publication du fascicule du brevet :
**12.05.93 Bulletin 93/19**

(51) Int. Cl.$^5$ : **A23L 1/277,** A23L 1/015,
A23L 1/214, A23L 1/10,
A23L 1/308

(21) Numéro de dépôt : **91400785.1**

(22) Date de dépôt : **22.03.91**

(54) **Procédé d'élimination des peroxydes de substances végétales blanchies et sèches.**

(30) Priorité : **30.03.90 FR 9004399**

(43) Date de publication de la demande :
**02.10.91 Bulletin 91/40**

(45) Mention de la délivrance du brevet :
**12.05.93 Bulletin 93/19**

(84) Etats contractants désignés :
**BE CH DE DK FR GB LI NL SE**

(56) Documents cités :
**DE-A- 2 455 591
FR-A- 2 382 866
US-A- 4 246 289
PATENT ABSTRACTS OF JAPAN vol. 11, no.
326 (C-454)(2773) 23 octobre 1987, & JP-A-62
111674 (SUSUMU MUROFUSHI) 22 mai 1987,**

(73) Titulaire : **ELF ATOCHEM S.A.
4 & 8, Cours Michelet La Défense 10
F-92800 Puteaux (FR)**

(72) Inventeur : **Devic, Michel
27, Chemin des Fonds
F-69110 Sainte Foy les Lyon (FR)**

(74) Mandataire : **Rochet, Michel et al
ELF ATOCHEM S.A. Département Propriété
Industrielle 4-8, Cours Michelet La Défense 10
- Cedex 42
F-92091 Paris-La-Défense (FR)**

## Description

La présente invention concerne un procédé d'élimination des peroxydes qui subsistent dans des matières végétales blanchies à l'aide de peroxyde d'hydrogène et sèches.

Des matières végétales ainsi blanchies et sèches sont obtenues à partir de pulpes, céréales, grains, farines, sons, fruits, agrumes, légumes, engagés selon les cas en l'état ou après extraction ou séparation du constituant normalement valorisable le cas échéant, comme le sucre, le jus de fruit, la pectine, la farine, l'amidon ou l'huile.

Comme exemples de matière de départ présentées sous une des formes ci-dessus on peut citer la betterave, le blé, le maïs, l'avoine, l'orge, la pomme, la pêche, la poire, l'abricot, le petit pois, les oléagineux comme le tournesol, le soja, l'arachide, la noix de coco.

Le blanchiment de telles matières est réalisable à l'aide de peroxyde d'hydrogène, par exemple selon un procédé tel que celui décrit dans le brevet des Etats-Unis d'Amérique n°4241093.

Les matières ainsi blanchies sont amenées à l'état sec, c'est-à-dire sans matière liquide distincte de la matière solide. Leur teneur pondérale en eau peut alors atteindre environ 20 % mais pour nombre d'entre elles, comme par exemple les farines ou la pulpe de betterave blanchies, cette teneur n'excède pas environ 10-11 %.

Les matières végétales ainsi blanchies à l'aide de peroxyde d'hydrogène et sèches sont désignées dans tout ce qui suit par fibres végétales.

Ces fibres végétales sont utiles en particulier pour fabriquer des produits destinés à l'alimentation humaine, comme surtout des produits diététiques.

Les fibres végétales ont une teneur en peroxydes résiduels généralement trop élevée pour être compatible avec les exigences de l'alimentation humaine.

Par peroxydes on entend ici et dans tout ce qui suit le peroxyde d'hydrogène et les composés peroxydés dont il est le précurseur dans le domaine de l'invention.

La teneur en peroxydes des aliments finalement élaborés doit être extrêmement faible, voire nulle si possible.

Les traitements desdits aliments eux-mêmes avant leur présentation aux consommateurs doivent être chaque fois adaptés à la constitution de l'aliment consommable ; ils sont donc extrêment diversifiés en nature comme en mode de réalisation ; ils conduisent à une organisation d'ateliers spécifiques, donc onéreux.

Par exemple, le peroxyde d'hydrogène présent dans divers aliments, le plus souvent d'ailleurs d'origine animale, est éliminé dans un cas au moyen d'algues rouges ou de leurs extraits selon la demande de brevet japonais publiée sous le numéro 72.04982, dans un autre cas au moyen d'un mélange d'un composé de fer et de sucres selon la demande de brevet japonais publiée sous le numéro 77.07388, dans un autre cas encore au moyen de catalase selon IIDA Toshiyuki, Fukumi Toru, Hokusuishi Geppo 1982, 39(9), 242-255.

Pour ce qui est de l'élimination des peroxydes subsistant dans une matière végétale après son blanchiment par le peroxyde d'hydrogène, la demande de brevet japonais publiée sous le numéro 77.125657 décrit un procédé, qui, comme ceux évoqués ci-dessus, exige l'intervention d'additifs à la fibre végétale, en l'occurence de l'eau et de la matière végétale d'origine non blanchie. Un tel procédé présente le double inconvénient d'une dilution par de l'eau et d'une regression du niveau de blancheur d'une matière qui vient justement d'être blanchie et déshydratée.

Il a maintenant été trouvé un procédé, objet de la présente invention, qui est d'ordre général, ne porte pas atteinte aux qualités de la fibre végétale en particulier à son degré de siccité et à son degré de blancheur, mais permet d'amener sa teneur en peroxydes, exprimée ici comme dans tout ce qui suit en peroxyde d'hydrogène en poids par rapport au poids de la fibre végétale, d'une valeur qui peut atteindre par exemple de l'ordre de 1 %, à une valeur proche de zéro.

Le procédé de la présente invention est un procédé d'élimination des peroxydes qui subsistent dans une matière végétale blanchie à l'aide de peroxyde d'hydrogène et sèche, caractérisé en ce que ladite matière est uniquement soumise à un traitement thermique à une température = égale ou supérieure à 60°C en atmosphère confinée de sorte que sa teneur pondérale en eau reste à sa valeur initiale pendant ledit traitement.

Dans la définition ci-dessus du procédé de l'invention :
- par "matière végétale blanchie à l'aide de peroxyde d'hydrogène et sèche" on entend toute matière définie jusqu'ici par fibre végétale, et qui est d'ailleurs désignée de même dans tout ce qui suit.
- par "atmosphère" on entend soit de l'air, soit de préférence un gaz inerte, normalement l'azote, en réalisant le traitement thermique à pression atmopshérique ou sous pression autogène selon les conditions choisies.
- par "la teneur en eau reste à sa valeur intiale" doit être compris que le caractère confiné de l'atmopshère est à assurer le mieux possible. Dans la pratique, compte-tenu des limites des équipements industriels, ce n'est pas sortir du cadre de l'invention que de constater jusqu'à environ 20 % de diminution relative de la valeur intiale de la teneur en eau de la fibre végétale. En procédant ainsi le procédé de l'invention permet de fabriquer une fibre végétale pratiquement débarassée de peroxydes et qui est directement utilisable sans autre opération dans la fabrication de produits destinés à l'alimentation humaine.

La température choisie pour réaliser le traitement thermique selon l'invention n'excède normalement pas 120°C environ et est de préférence choisie entre environ 80°C et environ 100°C. Pour des raisons économiques il est avantageux qu'elle soit proche de celle de la fibre végétale à sa sortie du séchage combiné au blanchiment par le peroxyde d'hydrogène.

La durée du traitement thermique varie entre d'assez larges limites, en général entre 1 h. et 10 h. environ en fonction essentiellement de la teneur initiale de la fibre végétale en peroxydes mais aussi de la nature de ladite fibre. Il est préféré un allongement de la durée du traitement à un risque de regression du degré de blanc à une température plus élevée.

Le procédé de l'invention convient particulièrement bien dans le cas de fibres végétales de pH compris entre 4 et 8.

Ce pH préféré est plus précisément compris entre 5 et 7 pour les fibres végétales obtenues à partir de pulpes de betterave ou de légumes, entre environ 6 et 8 pour les fibres végétales d'origine céréalière.

Le pH dont il est fait mention est celui d'une suspension aqueuse de fibre végétale contenant en poids de 3 % à 5 % de ladite fibre.

Le procédé de l'invention est réalisable en continu ou en discontinu dans un appareillage muni de préférence d'un système autorisant une température homogène au sein de la fibre végétale, par exemple par agitation mécanique, fluidisation.

Les exemples suivants, donnés à titre indicatif illustrent l'invention.

Dans chacun de ces exemples les expressions fibres végétales, peroxydes et pH ont la signification qui leur a été donnée jusqu'ici dans ce texte. Les peroxydes et le pH sont exprimés et/ou mesurés comme il a été déjà dit plus avant dans le texte. La teneur en eau est donnée en % pondéral. Le degré de blanc de la fibre végétale avant et après le traitement thermique en atmosphère confinée est mesuré à l'aide d'un réflectomètre, à 457 nm., selon la norme ISO de l'industrie papetière et exprimé en degrés ISO (°ISO).

Exemple 1

Une fibre végétale résultant du blanchiment et séchage d'une pulpe de betterave, dans lequel le peroxyde d'hydrogène est engagé dans le blanchiment à raison de 10 % en poids par rapport au poids de pulpe comptée à l'état sec, a une teneur en peroxydes égale à 0,47 %, une teneur en eau égale à 5 %, un pH égal à 5,6 et un degré de blanc égal à 35,7°ISO mesuré sur ladite fibre végétale une fois broyée à l'état de farine.

La fibre végétale ci-dessus est soumise au traitement thermique selon l'invention, en atmosphère d'air confinée, à 90°C, pendant 2 heures (essai 1a) et 6 heures (essai 1b) respectivement.

Les résultats des deux traitements sont reportés dans le tableau unique ci-dessous :

## Tableau unique

| n° de l'essai | fibre végétale traitée | | degré de blanc °ISO |
|---|---|---|---|
| | peroxydes, % | eau, % | |
| 1a | 0,08 | 5 | |
| 1b | 0* | 5 | 39,2 |

\* non décelables par dosage chimique

Exemple 2 :

Une autre fibre végétale résultant du blanchiment et séchage d'une pulpe de betterave comme dans l'exemple 1, a une teneur en peroxyde égale à 0,66 %, une teneur en eau égale à 7 %, un degré de blanc égal à 41°ISO.

Après traitement thermique réalisé comme dans l'exemple 1 pendant 2 heures à 90°C en atmosphère confinée d'air, la fibre végétale n'a plus qu'une teneur en peroxydes égale à 0,02 % tandis que sa teneur en eau est restée inchangée et que son degré de blanc est égal à 41,2°ISO.

Exemple 3 :

Une fibre végétale constituée d'un son de blé blanchi à l'aide de peroxyde d'hydrogène et séché, a une teneur en peroxydes égale à 0,37 %, une teneur en eau égale à 11 %, un pH égal à 7,2 et un degré de blanc égal à 47,7°ISO.

Après traitement comme dans les exemples précédents mais pendant 3 heures, la fibre végétale a une teneur en peroxyde qui n'est plus égale qu'à 0,08 % tandis que sa teneur en eau n'a pas été modifiée et que son degré de blanc est égal à 48,3°ISO.

Exemple 4 :

Une fibre végétale constituée d'un son de mais blanchi à l'aide de peroxyde d'hydrogène et séché a une teneur en peroxydes égale à 1,4 %, une teneur en eau égale à 8,3 %, un pH égal à 6,5 et un degré de blanc égal à 48,3°ISO.

Après traitement thermique toujours en atmosphère confinée d'air comme dans les autres exemples mais pendant 1 heure à 100°C, la fibre végétale a une teneur en peroxydes réduite à 0,17 %, la même teneur en eau qu'initialement et un degré de blanc égal à 49,7°ISO.

De l'examen des exemples ci-dessus on constate clairement que l'élimination efficace des peroxydes de la fibre végétale réalisée par application à ladite fibre du seul traitement thermique selon l'invention non seulement ne provoque pas de diminution du degré de blanc initial mais en assure même le plus généralement une amélioration. Un autre avantage du procédé de l'invention réside dans le fait que la fibre végétale débarassée des peroxydes est directement utilisable dans la fabrication des produits destinés à l'alimentation humaine.

**Revendications**

1. Procédé d'élimination des peroxydes d'une matière végétale blanchie à l'aide de peroxyde d'hydrogène et sèche, caractérisé en ce que ladite matière est uniquement soumise à un traitement thermique à une température égale ou supérieure à 60°C en atmopshère confinée de sorte que sa teneur pondérale en eau reste à sa valeur initiale pendant ledit traitement.

2. Procédé selon la revendication 1, caractérisé en ce que la température n'excède pas 120°C.

3. Procédé selon une des revendications 1 et 2, caractérisé en ce que la température est comprise entre 80°C et 100°C.

4. Procédé selon l'une des revendications 1 à 3, caractérisé en ce que l'atmosphère confinée est une atmosphère d'air ou de gaz inerte à la pression atmosphérique ou sous pression autogène.

5. Procédé selon l'une des revendications 1 à 4, caractérisé en ce que la durée du traitement thermique est comprise entre 1 heure et 10 heures.

6. Procédé selon l'une des revendications 1 à 5 caractérisé en ce que le pH de la fibre végétale soumise au traitement thermique est compris entre 4 et 8.

7. Procédé selon la revendication 6, caractérisé en ce que le pH est compris entre 5 et 7 dans le cas où la matière végétale blanchie et sèche est obtenue à partir de betterave ou de légumes.

8. Procédé selon la revendication 6, caractérisé en ce que le pH est compris entre 6 et 8 dans le cas où la matière végétale blanchie et sèche est d'origine céréalière.

**Patentansprüche**

1. Verfahren zur Entfernung von Peroxiden aus mit Wasserstoffperoxid gebleichten und trockenen pflanzlichen Materialien, das dadurch charakterisiert ist, daß das besagte Material nur einer thermischen Behandlung bei einer Temperatur gleich oder höher als 60 °C in einer abgeschlossenen Atmosphäre derart unterworfen wird, daß der Wassergehalt seinen anfänglichen Wert während der Behandlung beibehält.

2. Verfahren nach Anspruch 1, dadurch gekennzeichnet, daß die Temperatur 120 °C nicht übersteigt.

3. Verfahren nach Anspruch 1 und 2, dadurch gekennzeichnet, daß die Temperatur zwischen 80 °C und 100 °C gehalten wird.

4. Verfahren nach einem der Ansprüche 1 bis 3, dadurch gekennzeichnet, daß die abgeschlossene Atmosphäre aus Luft oder Stickstoff bei Atmosphärendruck oder Eigendruck besteht.

5. Verfahren nach einem der Ansprüche 1 bis 4, dadurch gekennzeichnet, daß daß die Dauer der thermischen Behandlung sich zwischen 1 und 10 Stunden bewegt.

6. Verfahren nach einem der Ansprüche 1 bis 5, dadurch gekennzeichnet, daß der pH-Wert der pflanzlichen Faser, die der thermischen Behandlung unterworfen wird, zwischen 4 und 8 liegt.

7. Verfahren nach Anspruch 6, dadurch gekennzeichnet, daß der pH-Wert Fall zwischen 5 und 7 liegt, wobei das gebleichte und trockene pflanzliche Material aus Zuckerrüben oder Gemüse gewonnen wurde.

8. Verfahren nach Anspruch 6, dadurch gekennzeichnet, daß der pH-Wert zwischen 6 und 8 liegt, wobei das gebleichte und trockene pflanzliche Material aus Getreide stammt.

**Claims**

1. Process for removing peroxides from a hydrogen peroxide-bleached and dry plant material, characterised in that the said material is subjected to a heat treatment alone at a temperature equal to or greater than 60°C, in a confined atmosphere such that its water content by weight remains at its initial value during the said treatment.

2. Process according to Claim 1, characterised in that the temperature does not exceed 120°C.

3. Process according to either of Claims 1 and 2, characterised in that the temperature is between 80°C and 100°C.

4. Process according to one of Claims 1 to 3, characterised in that the confined atmosphere is an air or inert gas atmosphere at atmospheric pressure or under autogenous pressure.

5. Process according to one of Claims 1 to 4, characterised in that the duration of the heat treatment is between 1 hour and 10 hours.

6. Process according to one of Claims 1 to 5, characterised in that the pH of the vegetable fibre subjected to the heat treatment is between 4 and 8.

7. Process according to Claim 6, characterised in that the pH is between 5 and 7 in the case where the bleached and dry plant material is obtained from beet or vegetables.

8. Process according to Claim 6, characterised in that the pH is between 6 and 8 in the case where the bleached and dry plant material is of cereal origin.